# Europäisches Patentamt
# European Patent Office
# Office européen des brevets

(19)

(11) Numéro de publication: **0 268 521 B1**

(12) **FASCICULE DE BREVET EUROPEEN**

(45) Date de publication du fascicule du brevet:
**03.10.90**

(21) Numéro de dépôt: **87402464.9**

(22) Date de dépôt: **02.11.87**

(51) Int. Cl.⁵: **E21B 34/02,** E21B 33/068,
F16K 39/06, F16K 39/04

(54) **Vanne de sas perfectionnée.**

(30) Priorité: **14.11.86 FR 8615868**

(43) Date de publication de la demande:
**25.05.88 Bulletin 88/21**

(45) Mention de la délivrance du brevet:
**03.10.90 Bulletin 90/40**

(84) Etats contractants désignés:
**AT BE CH DE ES GB GR IT LI LU NL SE**

(56) Documents cités:
**FR-A- 611 522**
**FR-A- 653 141**
**FR-A- 985 053**
**GB-A- 574 756**
**US-A- 2 819 034**
**US-A- 2 959 187**
**US-A- 3 135 284**

(73) Titulaire: **GAZ DE FRANCE, 23, rue Philibert Delorme,
F-75017 Paris(FR)**

(72) Inventeur: **Devilleger, Denis, 56, Grande Rue Marcq,
F-78770 Thoiry(FR)**
Inventeur: **Le Gac, Jean-Yves, La Haute Pissotte,
F-78650 Beynes(FR)**

(74) Mandataire: **Lerner, François, 5, rue Jules Lefèbvre,
F-75009 Paris(FR)**

ACTORUM AG

## Description

L'invention concerne une vanne de sas perfectionnée en particulier pour l'exploitation de puits de gisements ou de stockages de gaz ou autres fluides sous pression.

D'une façon générale, une intervention telle par exemple que la mise en place d'outils de travail, dans un puits en pression nécessite l'utilisation d'un sas d'introduction ou de retrait qui doit être connecté sur la tête de puits.

A cet effet, la tête de puits possède en partie supérieure, une vanne de sas destinée à permettre soit la mise en communication, soit l'isolation du sas par rapport au puits.

Les vannes de sas peuvent être notamment du type à boulet, comme celles décrites dans FR-A 611 522, US-A 2 819 034, GB-A 574 756, FR-A 985 053, FR-A 653 141.

Ces vannes ne sont cependant pas toujours adaptées à l'utilisation à laquelle on les destine.

On notera en particulier que des détériorations des joints d'étanchéité apparaissent sur la vanne.

En effet, lorsque la vanne de sas est en position de fermeture, il règne des pressions différentes de part et d'autre du boulet de vanne. Cette différence de pression est, en général, très élevée et la manœuvre du boulet, notamment lors de l'ouverture de la vanne, est d'autant plus délicate qu'il faut éviter les à-coups de pression de façon à ne pas endommager les outils de travail que l'on désire mettre en place dans le puits.

Lors de sa manœuvre, le boulet de vanne est commandé en rotation, ce qui provoque un laminage du flux de fluide et a pour conséquence une dégradation importante des organes d'étanchéité. Aussi, suivant la fréquence d'utilisation de la vanne, des remises en état plus ou moins fréquentes sont nécessaires.

L'invention a pour objet de résoudre ces problèmes afin de réduire de façon sensible la fréquence des remises en état de la vanne.

A cet effet, la vanne de sas perfectionnée proposée dans l'invention comporte, reliant son passage d'entrée et son passage de sortie, un circuit de dérivation de faible section comportant au moins un clapet dont l'ouverture et la fermeture peuvent être commandées à volonté, ledit clapet étant commandé positivement à l'ouverture à l'encontre de l'action d'un organe de rappel élastique qui le maintient normalement en position fermée.

De cette façon, on pourra, en particulier avant l'ouverture de la vanne, réduire et même annuler la différence entre les pressions régnant en amont et en aval de cette dernière, ce qui aura pour effet d'éliminer le laminage du flux de gaz et améliorera nettement la tenue des organes d'étanchéité. Si la force de commande du clapet à l'ouverture est annulée, celui-ci est repoussé en position de fermeture, cette caractéristique constituant une mesure de sécurité tout à fait appropriée.

Selon l'invention, il est également prévu que le circuit de dérivation de la vanne comporte au moins un organe à débit de fuite réglable du type pointeau ou analogue. De cette façon, la réduction de la différence de pressions et la mise en équilibre de ces dernières s'opère sans à-coups.

De plus, cet organe assure une sécurité supplémentaire par une seconde fermeture du circuit de dérivation.

Les différents avantages et caractéristiques de l'invention apparaîtront plus clairement de la description qui va suivre faite en référence aux dessins d'accompagnement dans lesquels :

- la figure 1 illustre une vue schématique de dessus et en coupe partielle d'une vanne de sas classique en position fermée, à laquelle a été adjoint le circuit de dérivation de l'invention représenté en traits mixtes,
- la figure 2 montre cette même vanne de sas mais en position ouverte,
- la figure 3 montre une vue de face schématique et en coupe de la vanne de sas de l'invention, et
- la figure 4 présent une vue agrandie du détail IV de la figure 3.
- les figures 5 et 6 montrent des détails agrandis concernant deux variantes de construction d'organes de la vanne disposés aux endroits entourés V et VI à la figure 3.

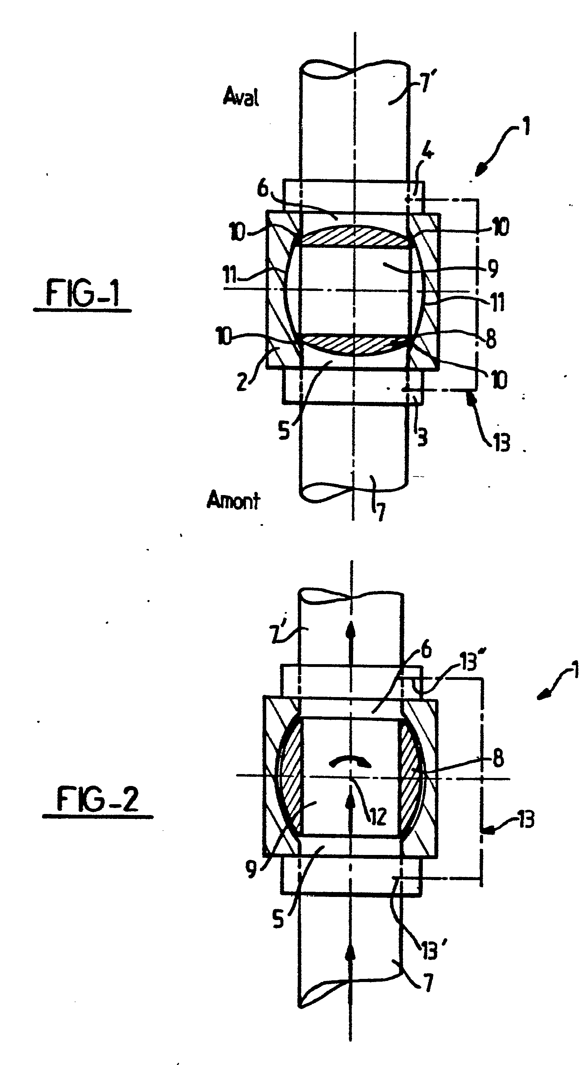

Si l'on se reporte tout d'abord à la figure 1, on voit illustrée une vanne de sas 1 classique comprenant un corps 2 muni de brides d'entrée 3 et de sortie 4 assurant respectivement le raccordement du passage d'entrée 5 et de sortie 6 de la vanne à deux tronçons 7 et 7' de la conduite d'exploitation du puits sur lequel on travaille (non représenté).

L'ouverture et la fermeture de la vanne de sas est assurée par une pièce 8 du type par exemple "boulet" percé d'un orifice 9 traversant.

Tout autre type de vanne que celle du type "à boulet" pourrait être utilisé pourvu qu'il soit adapté à l'utilisation recherchée.

Tel qu'illustré, le boulet 8 de forme sensiblement sphérique coopère avec une portée 11 également sensiblement sphérique formée sur le corps 2 de la vanne.

L'étanchéité est assurée par des joints repérés 10.

A la figure 1, on a représenté la vanne en position fermée.

En d'autres termes, dans cette position les parois extérieures du boulet 8 obturent la communication entre les passages d'entrée 5 et de sortie 6 de la vanne. Le fluide sous pression ne peut donc plus s'écouler en aval de la vanne 1.

Par contre, à la figure 2 on a illustré la vanne 1 en position ouverte. Le passage de la position de fermeture à la position d'ouverture de la vanne s'effectue par un pivotement sensiblement d'un quart de tour du boulet 8 autour de l'axe 12 repéré par un point sur la figure 2. Cette rotation a été matérialisée par une flèche.

En position ouverte, l'orifice 9 du boulet débouche vers ses deux extrémités opposées sur les passages d'entrée 5 et de sortie 6.

Le fluide sous pression, par exemple du gaz, peut alors s'écouler à travers l'orifice de communication 9 entre le tronçon 7 et le tronçon 7' de la conduite.

A la figure 2, on a représenté par des flèches le sens d'écoulement du fluide sous pression.

Sur les deux figures 1 et 2 on a également illustré schématiquement et en traits mixtes le perfectionnement de l'invention consistant en un circuit de dérivation 13 du fluide sous pression susceptible de circuler à travers la vanne. Ce circuit de dérivation est, de préférence, de relativement faible section par rapport à celle des tronçons 7, 7' et de l'orifice de communication 9 et débouche d'une part au niveau du passage d'entrée 5 et, d'autre part, au niveau du passage de sortie 6 de la vanne.

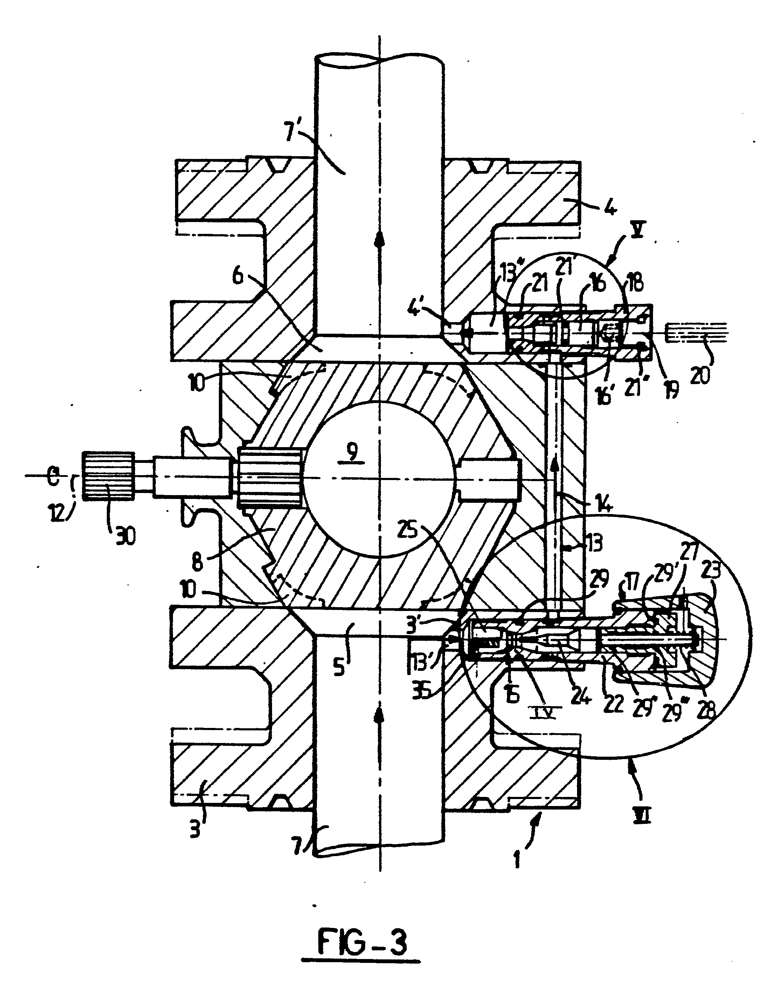

A La figure 3, on a illustré plus en détails la vanne de sas perfectionnée de l'invention.

Sur cette figure, outre le corps 2 de la vanne à l'intérieur duquel est disposé le boulet de réglage 8 percé (en 9) et les brides amont 3 et aval 4 reliant les passages d'entrée 5 et de sortie 6 respectivement aux tronçons 7 et 7' de la conduite, on voit clairement illustré le circuit de dérivation 13.

Ce circuit 13, comprend dans le sens de l'écoulement du gaz sous pression (matérialisé par la flèche 14), un clapet 15 dont l'ouverture et la fermeture peuvent être commandées à volonté et, de préférence, un organe 16 à débit de fuite réglable du type pointeau ou analogue.

La partie du circuit de dérivation 13 située entre le clapet 15 et le pointeau 16 peut être notamment ménagée dans le corps 2 de la vanne, ses extrémités 13', 13" débouchant respectivement au niveau de la paroi interne 3', 4' de chacune des brides 3 et 4.

Le pointeau 16 est, tel qu'illustré, intégré dans un corps 18 par exemple logé dans une partie coopérante de la bride aval 4 de la vanne et comprend une empreinte 16' s'ouvrant sur un orifice débouchant 19 formé sur le corps 18 de façon à pouvoir recevoir la tête d'une clé 20 de réglage du débit de fuite du fluide sous pression susceptible de s'écouler dans le circuit de dérivation 13.

Des joints 21, 21', assurent l'étanchéité du montage. Le joint 21" empêche le pointeau 16 de sortir du corps 18 en fin de dévissage.

Le clapet 15 peut, quant à lui, être intégré dans une pièce de commande, repérée en 17, formant par exemple organe d'actionnement de type "coup de poing" en étant disposé dans un corps 22 s'étendant dans une partie fixe coopérante de la bride amont 3 de la vanne.

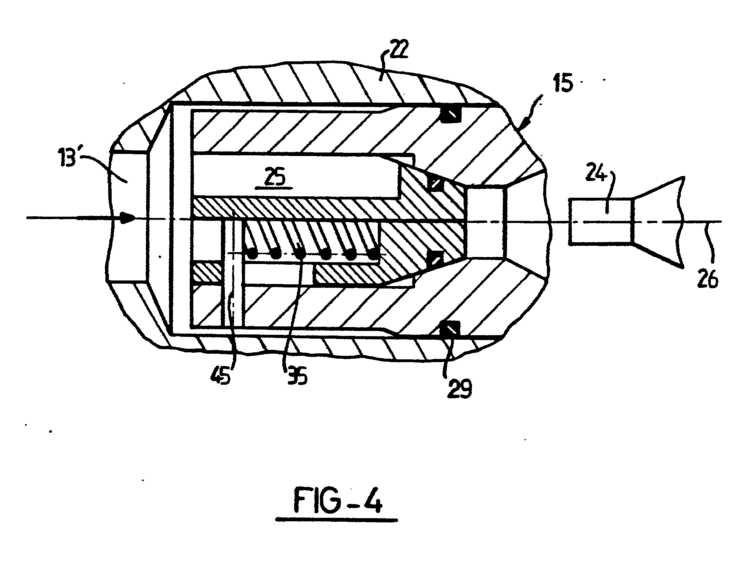

La pièce de commande "coup de poing" 17 comprend un chapeau 23 de manoeuvre monté sur le corps 22 et agissant sur une tige poussoir 24, guidée par une pièce 27, contre l'action d'un ressort 28 et commandant le clapet 15, lequel clapet comprend, tel qu'illustré plus en détail à la figure 4, une fraisure 25 d'écoulement du fluide sous pression et un ressort 35 de maintien du clapet 15 en position fermée, ce ressort agissant à l'encontre de l'action du poussoir 24. Une goupille 45 ou une pièce équivalente évite la rotation du clapet 15 tout en permettant sa translation sensiblement dans l'axe 26 de la pièce de commande 17.

Des joints 29, 29', 29", 29‴, assurent l'étanchéité du montage.

On va maintenant décrire le fonctionnement de la vanne de sas perfectionnée de l'invention.

A la figure 3, cette vanne perfectionnée est en position fermée (voir également figure 1). Le boulet 8 obture la commmunication entre les passages d'entrée 5 et de sortie 6 de la vanne, isolant ainsi le tronçon 7 soumis à la pression régnant dans le puits du tronçon 7' soumis alors à la pression atmosphérique.

Le clapet 15 est également en position fermée, maintenue ainsi par le ressort 35 et la pression du puits.

Aucun fluide ne circule donc dans le circuit de dérivation 13.

De préférence, le pointeau 16 est alors réglé (au moyen de la clé 20) pour permettre le passage éventuel d'un débit de fuite voulu du fluide sous pression.

Dans les vannes de sas "à boulet" sans circuit de dérivation, l'ouverture s'obtient comme on l'a déjà noté, en manoeuvrant le boulet 8 en rotation sensiblement d'un quart de tour autour de l'axe 12 par l'intermédiaire d'un bouton ou carré de manoeuvre 30.

Toutefois, cette manoeuvre d'ouverture de la vanne provoquant généralement un laminage important du flux de fluide sous pression qui s'écoule alors dans la conduite, cela entraîne plus ou moins rapidement une dégradation sensible des joints d'étanchéité 10. On notera, à titre d'exemple, que la différence de pression régnant de part et d'autre du boulet de vanne peut varier de 40 bars à plus de 200 bars suivant le gisement ou le stockage.

C'est pourquoi, dans l'invention on a prévu, avant toute ouverture de la vanne, de réduire puis d'égaler sensiblement les pressions régnant de part et d'autre de ce boulet.

A cet effet, on appuie sur le chapeau 23 de la pièce de commande "coup de poing" 17 ce qui provoque le déplacement en translation dans l'axe 26 du poussoir 24 qui commande positivement à l'ouverture le clapet 15 à l'encontre du ressort 35 et de la pression du puits. Le fluide sous pression peut alors s'écouler à travers la fraisure 25 du clapet dans le circuit de dérivation 13 vers le pointeau 16 (toujours réglé pour laisser passer le débit de fuite voulu) et donc déboucher au niveau de la paroi intérieure 4' de la bride aval 4 dans le passage de sortie 6 de la vanne. Ainsi, le boulet 8 étant toujours en position fermé, on va équilibrer peu à peu les pressions règnant en amont et en aval de celui-ci et donc faciliter la manoeuvre d'ouverture de la vanne en réduisant nettement les inconvénients des vannes de sas classiques.

Dès que l'on a contrôlé que les pressions de part et d'autre du boulet 8 sont sensiblement égales, on relâche la pression exercée sur le chapeau 23. La tige poussoir 24 se dégage alors de son appui sur le clapet 15 sous l'action du ressort 28, lequel clapet revient en position fermée sous l'action de son ressort 35.

Le fluide sous pression ne peut alors plus circuler dans le circuit de dérivation 13.

Parallèlement, on a manoeuvré le boulet 8 vers sa position d'ouverture et ainsi permis au fluide contenu dans le puits de s'écouler à nouveau.

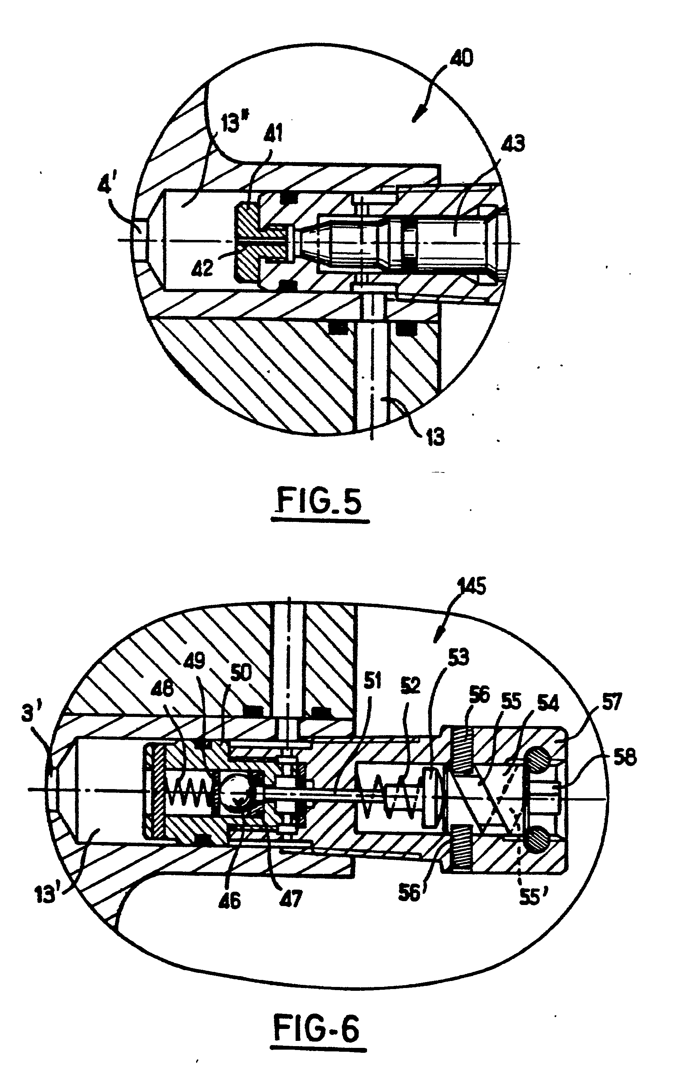

Selon la variante de détail illustrée à la figure 5 l'organe de réglage de débit de fuite repéré de façon générale en 16 à la figure 3 est remplacé par un organe de debit de fuite plus précis répéré dans son ensemble 40 et comprenant essentiellement une pièce 41 formée avec un orifice calibré 42 par lequel débouche l'extrémité de sortie du passage 13 (vers l'extrémité 13" et le débouché 4' de la dérivation). Avantageusment, le passage calibré 42 est contrôlé par un organe d'ouverture/fermeture tel qu'un robinet à pointeau 43, qui peut être analogue à l'organe à pointeau 16 déjà décrit à la figure 3.

Cette disposition présente l'avantage que l'on est certain d'avoir un débit de fuite parfaitement contrôlé et déterminé par l'orifice calibré 42, le robinet à pointeau 43 servant simplement à contrôler l'existence de ce débit de fuite ou à l'obturer.

Selon la variante de détail illustrée à la figure 6, on utilise à la place du clapet repéré dans son ensemble 15 à la figure 3 un clapet plus perfectionné repéré dans son ensemble 145 et comprenant essentiellement, contrôlant le passage d'arrivée 3', 13' de dérivation, un clapet du type à bille 46 pressée sur son siège 47 au moyen d'un ressort 48. Le ressort 48 agit sur la bille 46 par l'intermédiaire d'une rondelle 49 percée de trous, le tout étant monté avec les joints d'étanchéité appropriés à l'intérieur d'un manchon 50 dans le passage 13'.

L'ouverture du clapet à bille 46 est obtenu à l'aide d'une tige poussoir 51 rappelée normalement en arrière par un ressort 52 agissant sous la tête 53 de la tige 51. La commande en poussée de la tige poussoir 51 (pour ouvrir le clapet 46-47) s'obtient par une commande en rotation d'un piston 54 comportant sur sa périphérie deux rampes hélicoïdales 55, 55' dans lesquelles s'engagent deux ergots 56, 56' fixés dans la paroi du cylindre 57 qui reçoit le piston 54. La rotation se fait au moyen d'une clé (non représentée) agissant sur l'extrémité convenablement conformée à pans 58 accessible de l'extérieur du piston 54.

Cette disposition a l'avantage de faciliter la manoeuvre d'ouverture de la dérivation, en particulier lorsqu'il s'agit de forages ou gisements sous très haute pression et pour lesquels l'ouverture du clapet par simple poussée ("en coup de poing") du mode de réalisation illustré et décrit à la figure 3 peut s'avérer malaisée.

On notera que, comme le clapet "coup de poing" 15 illustré figure 3, le clapet 145 revient, par sécurité, automatiquement dans sa position de fermeture lorsque l'on n'agit plus sur lui.

**Revendications**

1. Vanne de sas perfectionnée en particulier pour l'exploitation de puits de gisement ou de stockage de gaz ou autres fluides sous pression du type comprenant, reliant son passage d'entrée (5) et son passage de sortie (6), un circuit (13) de dérivation de faible section comportant au moins un clapet (15, 145) dont l'ouverture et la fermeture peuvent être commandées à volonté, caractérisée en ce que ledit clapet (15, 145) est commandé positivement à l'ouverture à l'encontre de l'action d'un organe (35, 48) de rappel élastique qui le maintient normalement en position fermée.

2. Vanne de sas selon la revendication 1 caractérisée en ce que ledit circuit (13) comporte au moins un organe (16,40) à débit de fuite réglable du type pointeau ou analogue.

3. Vanne de sas selon la revendication 1 caractérisée en ce que ledit circuit (13) comporte au moins un organe (40) à débit de fuite prédéterminé tel qu'un orifice calibré (42).

4. Vanne de sas selon la revendication 3 caractérisée en ce que ledit organe à débit de fuite déterminé (40) est contrôlé par un organe d'ouverture/fermeture, tel qu'un robinet à pointeau (43).

5. Vanne de sas selon l'une des revendications précédentes caractérisé en ce que ledit clapet (145) est du type à bille (46) commandé par un poussoir (51) dont le mouvement progressif d'avance ou de recul est contrôlé par la rotation d'un piston (54) formé avec au moins une rampe hélicoïdale extérieure (55, 55'), ledit piston tournant autour de l'axe du poussoir et engageant au moins un ergot (56, 56') fixe de la paroi d'un cylindre (57) coopérant qui reçoit le piston pour entraîner son mouvement en translation.

6. Vanne de sas selon l'une quelconque des revendications précédentes caractérisée en ce que la vanne (1) comportant vers son entrée et vers sa sortie deux brides (3, 4) de raccordement aux conduits (7, 7') d'exploitation du puits, ledit circuit (13) débouche à chacune de ses extrémités (13', 13") respectivement au niveau de la paroi interne (3', 4') de chacune desdites brides (3,4).

7. Vanne de sas selon l'une quelconque des revendications précédentes caractérisée en ce qu'elle est du type à boulet (8).

**Claims**

1. An improved shut-off valve particularly for the exploitation of wells tapping deposits or stores of gases or other pressurised media of the type comprising, connecting its inlet passage (5) and its outlet passage (6), a by-pass circuit (13) of small cross-section comprising at least one valve member (15, 145) the opening and closing of which may be operated at will, characterised in that the said valve (15, 145) is positively caused to open against the action of a restoring member (35, 48) which normally maintains it in the closed position.

2. A shut-off valve according to claim 1, characterised in that the said circuit (13) comprises at least one regulable leakage flow member (16, 40) of the needle or similar type.

3. A shut-off valve according to claim 1, characterised in that the said circuit (13) comprises at least one predetermined leakage flow member (40) such as a calibrated orifice (42).

4. A shut-off valve according to claim 3, characterised in that the said predetermined leakage flow member (40) is controlled by an opening/closing member such as a needle valve (43).

5. A shut-off valve according to one of the preceding claims, characterised in that the said valve (145) is of the ball type (46) operated by a push member (51), the progressive forward or reverse movement of which is controlled by the rotation of a piston (54) formed with at least one outer helical ramp (55, 55'), the said piston turning about the axis of the push member and engaging at least one stud (56, 56') fixed on the wall of a cylinder (57) which co-operates with it and which receives the piston in order to impart a translatory movement to it.

6. A shut-off valve according to any one of the preceding claims, characterised in that the valve (1) comprises towards its inlet and towards its outlet two flanges (3, 4) for connection to the well exploiting ducts (7, 7'), the said circuit (13) discharging at each of its ends (13', 13'') respectively at the level of the inner wall (3', 4') of each of the said flanges (3, 4).

7. A shut-off valve according to any one of the preceding claims, characterised in that it is of the ball type (8).

**Patentansprüche**

1. Schleusenventil, insbesondere für die Nutzung von Lagerschächten oder der Lagerung von Gas oder anderen Fließmitteln unter Druck; mit einem Abzweigungskreis (13) geringen Durchmessers, welcher den Eigangsdurchgang (5) und den Ausgangsdurchgang (6) des Ventils verbindet und mindestens eine Klappe (15, 145) aufweist, deren Öffnen und Schließen nach Wunsch gesteuert werden kann, dadurch gekennzeichnet, daß die Klappe (15, 145) zuverlässig zum Öffnen gegen die Wirkung eines elastischen Rückholorganes (35, 48) gesteuert wird, welches das Ventil normalerweise in geschlossener Position hält.

2. Schleusenventil nach Anspruch 1, dadurch gekennzeichnet, daß der Kreis (13) mindestens ein regelbares Organ (16, 40) für die Leckagemenge vom Nadeltyp oder dergleichen aufweist.

3. Schleusenventil nach Anspruch 1, dadurch gekennzeichnet, daß der Kreis (13) mindestens ein Organ (40) für die vorbestimmte Leckagemenge von der Art einer kalibrierten Öffnung (42) aufweist.

4. Schleusenventil nach Anspruch 3, dadurch gekennzeichnet, daß das Organ für die bestimmte Leckagemenge (40) durch ein Öffnungs-/Schließorgan von der Art eines Nadelventils (43) gesteuert wird.

5. Schleusenventil nach einem der vorhergehenden Ansprüche, dadurch gekennzeichnet, daß die Klappe (145) vom Typ mit kleiner Kugel (46) ist, welche durch eine Druckvorrichtung (51) gesteuert wird, deren fortschreitende Vorwärts- oder Rückwärtsbewegung durch die Drehung eines Kolbens (54) kontrolliert wird, der mit mindestens einer äußeren schraubenförmigen Rampe (55, 55') gebildet ist, wobei der Kolben sich um die Achse der Stoßvorrichtung dreht und mit mindestens einem festen Vorsprung (56, 56') der Wand eines mitwirkenden Zylinders (57) in Eingriff steht, der den Kolben aufnimmt, um seine Bewegung in Translation anzutreiben.

6. Schleusenventil nach einem der vorhergehenden Ansprüche, dadurch gekennzeichnet, daß das Ventil (1) zu seinem Eingang und zu seinem Ausgang hin zwei Verbindungsflansche (3, 4) für die Leitungen (7, 7') für die Schachtnutzung aufweist, wobei der Kreis (13) an jedem seiner Enden (13', 13'') jeweils von der Innenwand (3', 4') jeder der Flansche (3, 4) herauskommt.

7. Schleusenventil nach einem der vorhergehenden Ansprüche, dadurch gekennzeichnet, daß es vom Typ mit Kugel (8) ist.

EP 0 268 521 B1

FIG-1

Aval

Amont

FIG-2

FIG-3

EP 0 268 521 B1

FIG-4

EP 0 268 521 B1

## FIG.5

## FIG-6